# EUROPÄISCHE PATENTSCHRIFT

(11) **EP 2 900 716 B1**
(45) Veröffentlichungstag und Bekanntmachung des Hinweises auf die Patenterteilung: **15.04.2020**
(21) Anmeldenummer: 13766073.4
(22) Anmeldetag: 23.09.2013
(51) Int. Cl.: C08G 18/24, C08G 18/28, C08G 18/34, C08G 18/79, B01J 31/02

(54) **POLYISOCYANAT-POLYADDITIONSPRODUKTE**
POLYISOCYANATE POLYADDITION PRODUCTS
PRODUITS DE POLYADDITION DE POLYISOCYANATE

(30) Priorität: 25.09.2012 EP 12185928
(43) Veröffentlichungstag der Anmeldung: 05.08.2015
(73) Patentinhaber: Covestro Deutschland AG, 51373 Leverkusen (DE)
(72) Erfinder: RICHTER, Frank, 51373 Leverkusen (DE); GRAHL, Michael, 51371 Leverkusen (DE); FLECK, Olaf, 51467 Bergisch-Gladbach (DE)
(74) Vertreter: Levpat
(86) Internationale Anmeldenummer: PCT/EP2013/069730
(87) Internationale Veröffentlichungsnummer: WO 2014/048879

(56) Entgegenhaltungen:
- WO-A1-2009/132784
- WO-A1-2011/051247

## Beschreibung

Die Erfindung betrifft die Herstellung von Polyisocyanat-Polyadditionsprodukten unter Verwendung spezieller Katalysatoren, wobei sich die Produkte insbesondere für den Beschichtungsbereich eignen.

Polyurethanbeschichtungen sind seit langem bekannt und werden in vielen Bereichen eingesetzt. Sie werden in der Regel aus einer Polyisocyanat- und einer Hydroxylkomponente durch Vermischen unmittelbar vor der Applikation hergestellt (2K-Technologie). Für lichtechte Beschichtungen werden in der Regel Polyisocyanatkomponenten auf Basis aliphatischer Polyisocyanate eingesetzt, die im Vergleich zu Produkten mit aromatisch gebundenen Isocyanatgruppen deutlich langsamer mit der Hydroxylkomponente in Reaktion treten. In den meisten Fällen muss daher die Reaktion katalysiert werden, insbesondere dann, wenn man keine allzu hohen Reaktionstemperaturen anwenden kann oder will, auch wenn möglichst zur weiteren Beschleunigung der Reaktion erwärmt wird. Als Katalysatoren haben sich dabei organische Zinnverbindungen, insbes. Dibutylzinndilaurat (DBTL) bewährt. Organozinnverbindungen haben per Definition mindestens eine Sn-C-Bindung im Molekül. Sie weisen den generellen Nachteil eines ungünstigen ökologischen Profils auf, was u. a. bereits dazu geführt hat, die Stoffklasse der Organozinnverbindungen aus Schiffsanstrichstoffen, denen sie als Biozid beigemengt wurden, vollständig zu verbannen.

Organozinn-freie Katalysatoren für die Polyurethanherstellung waren und sind daher im Fokus von Neuentwicklungen. Häufig weicht man dabei auf Elemente aus, deren toxikologisches Profil per se als weniger kritisch verglichen mit Organozinnverbindungen eingeschätzt wird, z.B. Wismut, Titan oder Zink. Ein Nachteil all dieser Katalysatoren ist allerdings, dass sie nicht so universell einsetzbar sind wie Organozinnverbindungen. So weisen viele der als Alternative diskutierten Katalysatoren in einer Reihe von Anwendungsgebieten Nachteile bis hin zum völligen Verlust der katalytischen Aktivität auf. Beispiele hierfür sind die rasche Hydrolyse von Wismutverbindungen im wässrigen Milieu, was sie für das aktuell und in Zukunft immer wichtiger werdende Gebiet der wasserbasierten Beschichtungstechnologien uninteressant macht, und die zuweilen unbefriedigenden Farbeffekte von Titanverbindungen in bestimmten Lackformulierungen.

Ein genereller Nachteil der 2K-Technologie ist weiterhin, dass die NCO-OH-Reaktion bereits bei Zimmertemperatur langsam, jedoch katalysiert deutlich schneller abläuft, was dazu führt, dass für die Verarbeitung der fertig formulierten Mischung eines derartigen 2K-Systems nur ein zeitlich enges Verarbeitungsfenster zur Verfügung steht (die so genannte Topfzeit), welches durch die Anwesenheit des Katalysators weiter verkürzt wird.

Es hat deshalb nicht an Versuchen gefehlt, Katalysatoren zu entwickeln, die die Vernetzungsreaktion bei der Bereitung der 2K-Mischung kaum, nach Applikation aber deutlich beschleunigen (latente Katalysatoren) und dabei weitgehend unabhängig vom gewählten Applikationsgebiet zu vergleichbaren Resultaten führen.

Man spricht bei Katalysatoren von Thermolatenz, wenn deren katalytische Aktivität erst bei Überschreitung einer für den jeweiligen Katalysator charakteristischen Temperatur zu Tage tritt.

Eine insbesondere im Bereich der Giesselastomere verwendete Klasse von latenten Katalysatoren sind Organoquecksilberverbindungen. Der prominenteste Vertreter ist hierbei das Phenylquecksilberneodecanoat (Handelsbezeichnungen: Thorcat® 535, Cocure® 44). U.a. wegen der Toxikologie der Quecksilberverbindungen spielen sie in der Beschichtungstechnologie jedoch keine Rolle. Ihr Einsatz wird auch in anderen Anwendungsgebieten zunehmend hinterfragt.

Hier hat man sich eher auf chemisch, z.B. durch (Luft-)Feuchtigkeit und/oder -sauerstoff (vgl. WO 2007/075561, Organometallics 1994 (13) 1034-1038, DE-A 69521682) sowie photochemisch aktivierbare Systeme konzentriert (vgl. US-A 4 549 945). Nachteil der beiden letztgenannten Systeme des Standes der Technik ist, dass einerseits eine definierte, reproduzierbare Migration von (Luft-)Feuchtigkeit bzw. -sauerstoff unabhängig von der Beschichtungsrezeptur (Vernetzungsgrad, Glasübergangstemperatur, Lösemittelgehalt etc.) sowie den Umgebungsbedingungen schlecht gewährleistet werden kann und andererseits, insbesondere bei pigmentierten Systemen, dem Einsatz von Strahlungsquellen zur Aktivierung des photolatenten Katalysators Grenzen gesetzt sind.

Die WO 2009/132784 und WO 2011/051247 beschreiben den Einsatz spezieller anorganischer Sn(IV)-Katalysatoren für die Überwindung des o.g. Topfzeit-Härtezeit-Problems.

Nachteil dieser Katalysatoren ist die mitunter gegenüber Standardkatalysatoren wie Dibutylzinndilaurat deutlich geringere Aktivität bei gleicher (molarer) Menge an anorganischem Zinnkatalysator, vgl. WO 2011/051247, Beispiele 7, 8 sowie 10-14: in keinem Fall wurde bei anfänglich 2 h 30°C und anschließend 60°C der im Vergleichsversuch 4 mit der äquimolaren Menge an DBTL bei gleicher Fahrweise erreichte NCO-Gehalt der Mischung (1,1% nach 4:00 h) erreicht bzw. unterschritten. Hierfür musste die Reaktionstemperatur nach der 30°C-Phase auf 80°C erhöht werden, WO 2011/051247, Beispiele 9 und 15.

Zwar lässt sich prinzipiell die Reaktivität außer durch Temperaturerhöhung (die nicht überall in beliebigem Ausmaß möglich ist) mit Erhöhung der Katalysatorkonzentration erhöhen, allerdings leidet hierbei überraschenderweise die Latenz (Beispiele 5 bis 8), was in WO 2011/051247 im Übrigen nicht erwähnt wird.

Letzterer Umstand eröffnet zwar prinzipiell den Zugang zu universell einsetzbaren, Organozinnfreien und damit toxikologisch unbedenklichen Katalysatoren, allerdings ist man in der Praxis bemüht, mit so wenig Katalysator wie möglich auszukommen und wird - nur um den Effekt der Thermolatenz zurückzudrängen und auch bei Zimmertemperatur eine hinreichende Beschleunigung der Reaktion zu bewirken - daher eine gezielte "Überdosierung" des Katalysators nur ungern in Kauf nehmen. Hinzu kommt, dass viele der in WO 2011/051247 aufgeführten anorganischen Zinnverbindungen nur eine geringe Löslichkeit im organischen Milieu der Polyurethan-Ausgangsstoffe aufweisen, was dem Einsatz sehr hoher Katalysatormengen ohnehin entgegen steht (die in Beispiel 8 aufgeführte Katalysatorkonzentration liegt im Bereich der Sättigungskonzentration des Katalysators im hier gewählten Polyisocyanat). Zwar kann man diesen Löslichkeitsdefiziten durch geeignete Substitution der organischen Reste in den beanspruchten Verbindungen entgegenwirken, allerdings sinkt damit einerseits der Gehalt an "aktivem" Zentralatom (Sn) und wird andererseits die Herstellung der Spezies aufwändiger und teurer, da zu ihrer Herstellung nicht mehr, wie im einfachsten Fall, auf preiswerte, kommerziell gut zugängliche Ethanolaminderivate wie N(CH₂CH₂OH)₃ oder CH₃N(CH₂CH₂OH)₂ zurückgegriffen werden kann. Schließlich wird gerade bei den aktivsten der in WO 2011/051247 beanspruchten Katalysatoren, insbesondere dem Katalysator 3, dort eingesetzt in Beispiel 7, eine - besonders bei höherer Lagertemperatur - nur eingeschränkte Stabilität der katalysierten Polyisocyanatkomponente beobachtet, was ebenfalls von Nachteil ist (Beispiel 22a der vorliegenden Anmeldung).

Weiterhin weisen die Primärprodukte einer besonders einfachen und damit kostengünstigen Synthesemethode für die in WO 2011/051247 als Katalysatorenklasse beanspruchten anorganischen Zinnverbindungen, das sind Sn(IV)-zentrierte Spirocylen, vgl. WO 2011/113926, eine besonders geringe Aktivität auf, was ihren Einsatz als Katalysatoren gemäß WO 2011/051247 wenig aussichtsreich erscheinen lässt. Allerdings ist ihre katalytische Aktivität für die, hier unerwünschte, Reaktion der Isocyanatgruppen untereinander gegenüber dem in Beispiel 22a der vorliegenden Anmeldung verwendeten Katalysatortyp deutlich verringert, was von Vorteil ist (vgl. Beispiel 22b der vorlegenden Anmeldung).

Es bestand daher die Aufgabe, die Vorteile der in der WO 2011/051247 genannten, thermolatenten Katalysatoren bei möglichst niedrigerer (molarer) Katalysatorkonzentration zur Geltung zu bringen, d.h. gegenüber den altbekannten, konventionellen Systemen auf Organozinnbasis auf vergleichbarem oder sogar verbessertem Niveau zu halten, ohne dabei allzu große Nachteile bei der Lagerstabilität der katalysierten Isocyanatkomponente in Kauf nehmen zu müssen. Weiterhin sollten dazu anorganische, Halogen-freie, Sn(IV)-zentrierte Spirocylen, deren Synthese beispielsweise in WO 2011/113926, Bsp. 3, aufgeführt wird, problemlos einsetzbar sein.

Diese Aufgabe konnte überraschenderweise durch den Zusatz von Protonensäuren zum Reaktionsgemisch gelöst werden, wobei das Mengenverhältnis der Protonensäure zum Katalysator und zur NCO-reaktiven Verbindung eine wesentliche Rolle spielt.

Gegenstand der Erfindung ist daher ein Verfahren zur Herstellung von Polyisocyanat-Polyadditionsprodukten, wobei
a) mindestens ein aliphatisches, cycloaliphatisches, araliphatisches und/oder aromatisches Polyisocyanat
b) mindestens einer NCO-reaktiveVerbindung
c) mindestens ein thermolatenter, anorganischer, Zinn enthaltender Katalysator
d) gegebenenfalls weitere von c) verschiedene Katalysatoren und/oder Aktivatoren
e) gegebenenfalls Füllstoffe, Pigmente, Additive, Verdicker, Entschäumer und/oder anderen Hilfs- und Zusatzstoffe und
f) eine, bezogen auf den unter c) genannten Katalysator mindestens äquimolare Menge und bezogen auf die NCO-reaktiven Gruppen aus der Verbindung aus b) maximal äquimolare Menge einer Protonensäure
miteinander zur Reaktion gebracht werden, wobei das Verhältnis des Gewichts des Zinns aus Komponente c) und des Gewichts der Komponente a) weniger als 1000 ppm beträgt, wenn Komponente a) ein aliphatisches Polyisocyanat ist und weniger als 80 ppm beträgt, wenn Komponente a) ein aromatisches Polyisocyanat ist,
dadurch gekennzeichnet, dass als thermolatente Katalysatoren c) zyklische Zinnverbindungen der Formel I, II oder III eingesetzt werden: 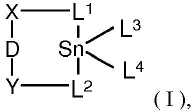 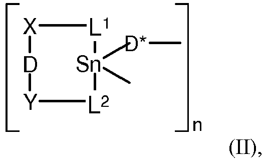 mit n > 1, 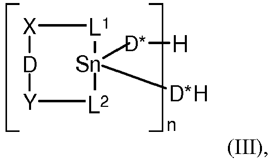 mit n > 1, wobei gilt:
D steht für -O-, -S- oder -N(R¹)-
   wobei R¹ für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 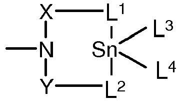 steht,
   oder R¹ und L³ zusammen für -Z-L⁵- stehen;
D* steht für -O- oder -S-;
X, Y und Z stehen für gleiche oder unterschiedliche Reste ausgewählt aus Alkylenresten der Formeln -C(R²)(R³)-, -C(R²)(R³)-C(R⁴)(R⁵)- oder -C(R²)(R³)-C(R⁴)(R⁵)-C(R⁶)(R⁷)- oder ortho-Arylenresten der Formeln 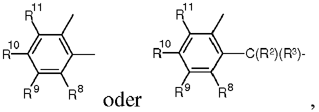 wobei R² bis R¹¹ unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen;
L¹, L² und L⁵ stehen unabhängig voneinander für -O-, -S-, -OC(=O)-, -OC(=S)-, -SC(=0)-, -SC(=S)-, -OS(=O)₂O-, -OS(=O)₂- oder -N(R¹²)-,
   wobei R¹² für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen, der gegebenenfalls Heteroatome aus der Reihe Sauerstoff, Schwefel, Stickstoff enthalten kann, oder für Wasserstoff steht;
L³ und L⁴ stehen unabhängig voneinander für -OH, -SH, -OR¹³, -Hal, -OC(=O)R¹⁴, -SR¹⁵,-OC(=S)R¹⁶, -OS(=O)₂OR¹⁷, -OS(=O)₂R¹⁸ oder -NR¹⁹R²⁰, oder L³ und L⁴ zusammen stehen für -L¹-X-D-Y-L²- , bevorzugt stehen L³ und L⁴ unabhängig voneinander für -OR¹³, -Hal,-OC(=O)R¹⁴, oder L³ und L⁴ zusammen stehen für -U-X-D-Y-L²-
   wobei für R¹³ bis R²⁰ unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen, die gegebenenfalls Heteroatome aus der Reihe Sauerstoff, Schwefel, Stickstoff enthalten können, oder für Wasserstoff stehen.

Bevorzugt handelt es sich bei D um -N(R¹)-.

Bevorzugt handelt es sich bei R¹ um Wasserstoff oder einen Alkyl-, Aralkyl-, Alkaryl- oder Arylrest mit bis zu 20 C-Atomen oder um den Rest 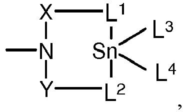 besonders bevorzugt um Wasserstoff oder einen Alkyl-, Aralkyl-, Alkaryl- oder Arylrest mit bis zu 12 C-Atomen oder um den Rest 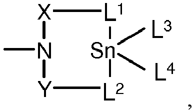 ganz besonders bevorzugt um Wasserstoff oder einen Methyl-, Ethyl-, Propyl-, Butyl-, Hexyl- oder Octyl-Rest, wobei Propyl-, Butyl-, Hexyl-, und Octyl für alle isomeren Propyl-,
Butyl-, Hexyl- sowie Octylreste stehen, um Ph-, CH₃Ph- oder um den Rest

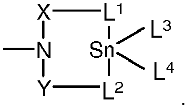

Bevorzugt handelt es sich bei D* um -0-.

Bevorzugt handelt es sich bei X, Y und Z um die Alkylenreste -C(R²)(R³)-, -C(R2)(R³)-C(R⁴)(R⁵)- oder den ortho-Arylenrest

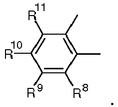

Bevorzugt handelt es sich bei R² bis R⁷ um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 8 C-Atomen, ganz besonders bevorzugt um Wasserstoff oder Alkylreste mit bis zu 8 C-Atomen, noch weiter bevorzugt um Wasserstoff oder Methyl.

Bevorzugt handelt es sich bei R⁸ bis R¹¹ um Wasserstoff oder Alkylreste mit bis zu 8 C-Atomen, besonders bevorzugt um Wasserstoff oder Methyl.

Bevorzugt handelt es sich bei L¹, L² und L⁵ um -NR¹²-, -S-, -SC(=S)-, -SC(=0)-, -OC(=S)-, -O-, oder -OC(=O)-, besonders bevorzugt um -O-, oder -OC(=O)-.

Bevorzugt handelt es sich bei R¹² um Wasserstoff oder einen Alkyl-, Aralkyl-, Alkaryl- oder Arylrest mit bis zu 20 C-Atomen, besonders bevorzugt um Wasserstoff oder einen Alkyl-, Aralkyl-, Alkaryl- oder Arylrest mit bis zu 12 C-Atomen, ganz besonders bevorzugt um Wasserstoff oder einen Methyl-, Ethyl-, Propyl-, Butyl-, Hexyl-oder Octyl-Rest, wobei Propyl-, Butyl-, Hexyl-, und Octyl für alle isomeren Propyl-, Butyl-, Hexyl- sowie Octylreste stehen.

Bevorzugt handelt es sich bei L³ und L⁴ um -Hal, -OH, -SH, -OR¹³, -OC(=O)R¹⁴, wobei die Reste R¹³ und R¹⁴ bis zu 20 Kohlenstoffatome, bevorzugt bis zu 12 Kohlenstoffatome aufweisen. Besonders bevorzugt handelt es sich bei L³ und L⁴ um Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat, wobei Pr, Bu, Hex und Oct für alle isomeren Propyl-, Butyl-, Hexyl- sowie Octylreste stehen, noch weiter bevorzugt um Cl-, MeO-, EtO-, PrO-, BuO-, HexO-, OctO-, PhO-, Hexanoat, Laurat, oder Benzoat, wobei Pr, Bu, Hex und Oct für alle isomeren Propyl-, Butyl-, Hexyl- sowie Octylreste stehen.

Bevorzugt handelt es bei R¹⁵ bis R²⁰ um Wasserstoff oder Alkyl-, Aralkyl-, Alkaryl- oder Arylreste mit bis zu 20 C-Atomen, besonders bevorzugt um Wasserstoff oder Alkyl-, Aralkyl-, Alkaryl- oder Arylreste mit bis zu 12 C-Atomen, ganz besonders bevorzugt um Wasserstoff, Methyl-, Ethyl-, Propyl-, Butyl-, Hexyl-, oder Octyl-Reste, wobei Propyl-, Butyl-, Hexyl-, und Octyl für alle isomeren Propyl-, Butyl-, Hexyl- sowie Octylreste stehen.

Die Einheiten L¹-X, L²-Y und L⁵-Z stehen bevorzugt für -CH₂CH₂O-, -CH₂CH(Me)O-, -CH(Me)CH₂O-, -CH₂C(Me)₂O-, -C(Me)₂ CH₂O- oder -CH₂C(=O)O-.

Die Einheit L¹-X-D-Y-L² steht bevorzugt für: HN[CH₂CH₂O-]₂, HN[CH₂CH(Me)O-]₂, HN[CH₂CH(Me)O-][CH(Me)CH₂O-], HN[CH₂C(Me)₂O-]₂, HN[CH₂C(Me)₂O-][C(Me)₂CH₂O-], HN[CH₂C(=O)O-]₂, MeN[CH₂CH₂O-]₂, MeN[CH₂CH(Me)O-]₂, MeN[CH₂CH(Me)O-][CH(Me)CH₂O-], MeN[CH₂C(Me)₂O-]₂, MeN[CH₂C(Me)₂O-][C(Me)₂CH₂O-], MeN[CH₂C(=O)O-]₂, EtN[CH₂CH₂O-]₂, EtN[CH₂CH(Me)O-]₂, EtN[CH₂CH(Me)O-][CH(Me)CH₂O-], EtN[CH₂C(Me)₂O-]₂, EtN[CH₂C(Me)₂O-][C(Me)₂CH₂O-], EtN[CH₂C(=O)O-]₂, PrN[CH₂CH₂O-]₂, PrN[CH₂CH(Me)O-]₂, PrN[CH₂CH(Me)O-][CH(Me)CH₂O-], PrN[CH₂C(Me)₂O-]₂, PrN[CH₂C(Me)₂O-][C(Me)₂CH₂O-], PrN[CH₂C(=O)O-]₂, BuN[CH₂CH₂O-]₂, BuN[CH₂CH(Me)O-]₂, BuN[CH₂CH(Me)O-][CH(Me)CH₂O-], BuN[CH₂C(Me)₂O-]₂, BuN[CH₂C(Me)₂O-][C(Me)₂CH₂O-], BuN[CH₂C(=O)O-]₂, HexN[CH₂CH₂O-]₂, HexN[CH₂CH(Me)O-]₂, HexN[CH₂CH(Me)O-][CH(Me)CH₂O-], HexN[CH₂C(Me)₂O-]₂, HexN[CH₂C(Me)₂O-][C(Me)₂CH₂O-], HexN[CH₂C(=O)O-]₂, OctN[CH₂CH₂O-]₂, OctN[CH₂CH(Me)O-]₂, OctN[CH₂CH(Me)O-][CH(Me)CH₂O-], OctN[CH₂C(Me)₂O-]₂, OctN[CH₂C(Me)₂O-][C(Me)₂CH₂O-], OctN[CH₂C(=O)O-]₂, wobei Pr, Bu, Hex und Oct für alle isomeren Propyl-, Butyl- sowie Octylreste stehen können, PhN[CH₂CH₂O-]₂, PhN[CH₂CH(Me)O-]₂, PhN[CH₂CH(Me)O-][CH(Me)CH₂O-], PhN[CH₂C(Me)₂O-]₂, PhN[CH₂C(Me)₂O-][C(Me)₂CH₂O-], PhN[CH₂C(=O)O-]₂,

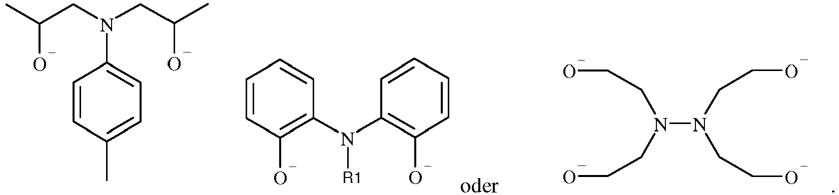

Die Zinnverbindungen - wie dem Fachmann bekannt ist - neigen zur Oligomerisierung, so dass häufig mehrkernige Zinnverbindungen oder Gemische aus ein- und mehrkernigen Zinnverbindungen vorliegen. In den mehrkernigen Zinnverbindungen sind die Zinnatome bevorzugt über Sauerstoffatome (,Sauerstoffbrücken', *vide intra*) miteinander verbunden. Typische oligomere Komplexe (mehrkernige Zinnverbindungen) entstehen z.B. durch Kondensation der Zinnatome über Sauerstoff oder Schwefel, z.B. 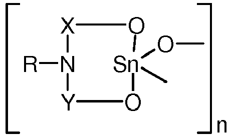 mit n > 1 (vgl. Formel II). Bei niedrigen Oligomerisierungsgraden findet man häufig cyclische, bei höheren Oligomerisierungsgraden lineare Oligomere mit OH- bzw. SH-Endgruppen (vgl. Formel III).

In den Fällen, in denen die Zinnverbindungen Liganden mit freien OH- und/oder NH-Resten aufweisen, kann der Katalysator bei der Polyisocyanat-Polyadditionsreaktion in das Produkt eingebaut werden. Besonderer Vorteil dieser einbaubaren Katalysatoren ist ihr stark reduziertes Fogging-Verhalten, was besonders beim Einsatz von Polyurethanbeschichtungen im Automobilinnenraum wichtig ist.

Die verschiedenen Herstellungsmethoden für die erfindungsgemäß zu verwendenden Zinn(IV)-Verbindungen bzw. ihrer Zinn(II)-Precursoren sind u.a. beschrieben in: WO 2011/113926, J. Organomet. Chem. 2009 694 3184-3189, Chem. Heterocycl. Comp. 2007 43 813-834, Indian J. Chem. 1967 5 643-645 sowie in darin angeführter Literatur.

Eine Reihe zyklischer Zinnverbindungen wurde bereits auch für die Verwendung als Katalysator für das Isocyanat-Polyadditionsverfahren vorgeschlagen, vgl. DD-A 242 617, US-A 3 164 557, DE-A 1 111377, US-A 4 430 456, GB-A 899 948, US-A 2008/0277137. Allen diesen vorbeschriebenen Systemen des Standes der Technik ist allerdings gemein, dass es sich ausnahmslos um Sn-II- oder Organo-zinn-IV-verbindungen handelt.

Die Katalysatoren können mit weiteren aus dem Stand der Technik bekannten Katalysatoren/Aktivatoren kombiniert werden; zum Beispiel Titan-, Zirkonium-, Bismut-, Zinn(II)- und/oder eisenhaltigen Katalysatoren, wie sie beispielsweise in WO 2005/058996 beschrieben sind. Möglich ist auch eine Zugabe von Aminen oder Amidinen.

Der erfindungsgemäße Katalysator kann, ggf. in einem geeigneten Lösungsmittel vorgelöst, gemeinsam mit der NCO-reaktiven Verbindung (Polyol) oder dem Polyisocyanat der Reaktionsmischung zugegeben werden.

Gleiches gilt für die erfindungsgemäß einzusetzende Protonensäure. Sie kann gemeinsam mit dem Katalysator, z.B. vorgelöst in einer der o.g. Komponenten, wahlweise aber auch separat, vorgelöst in der nicht den Katalysator enthaltenden Komponente, zum Einsatz gelangen. Bei letzterer Vorgehensweise resultiert als weiterer Vorteil, dass man an sich, d.h. in Abwesenheit von Protonensäuren, vergleichsweise inaktive Katalysatoren (was nachteilig ist), die in der Regel aber auch bzgl. der unerwünschten Umsetzung der Isocyanatgruppen untereinander weniger aktiv sind (was von Vorteil ist), in der Isocyanatkomponente gelöst einsetzen kann und dabei trotzdem vergleichsweise lagerstabile Zubereitungen erhält, die erst nach Vermischung mit dem Reaktionspartner, in der Regel einem OH-funktionellen Polyol auf Polyether-, Polyester-, Polyacrylat- und/oder Polycarbonatbasis, welcher die Protonensäure enthält, bei der Aushärtungsreaktion die erfindungsgemäßen Vorteile entfalten.

Die für die Herstellung von Polyisocyanat-Polyadditionsprodukten, insbesondere Polyurethanen geeigneten Polyisocyanate (a) sind die dem Fachmann an sich bekannten organischen aliphatischen, cycloaliphatischen, araliphatischen und/oder aromatischen Polyisocyanate mit mindestens zwei Isocyanatgruppen pro Molekül sowie Gemische davon. Beispiele für derartige Polyisocyanate sind Di- oder Triisocyanate, wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H₁₂MDI), 3,5,5-Trimethyl-1-isocyanato-3-isocyanatomethylcyclohexan (Isophorondiisocyanat, IPDI), 1,3- sowie 1,4-Bis(isocyanatomethyl)cyclohexan (H₆XDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktuereinheiten. Bevorzugt werden Polyisocyanate auf Basis aliphatischer und cycloaliphatischer Diisocyanate eingesetzt.

Die Polyisocyanatkomponente (a) kann in einem geeigneten Lösemittel vorliegen. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA).

Die Isocyanatkomponente kann darüber hinaus übliche Hilfs- und Zusatzmittel, wie z.B. Rheologieverbesserer (zum Beispiel Ethylencarbonat, Propylencarbonat, dibasische Ester, Zitronensäureester), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalysatoren (zum Beispiel Trialkylamine, Diazabicyclooctan, Zinndioctoat, Dibutylzinndilaurat, N-Alkylmorpholin, Blei-, Zink-, Zinn-, Calcium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Polyurethan/Polyharnstoff einbaufähige Farbstoffe (die also über Zerewitinoff-aktive Wasserstoffatome verfügen) und/oder Farbpigmente enthalten.

Als NCO-reaktive Verbindungen (b) können alle dem Fachmann bekannten Verbindungen eingesetzt werden, welche eine mittlere OH- bzw. NH-Funktionalität von mindestens 1,5 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit) sein, kurzkettige Polyamine aber auch höhermolekulare Polyhydroxyverbindungen wie Polyetherpolyole, Polyesterpolyole, Polycarbonatpolyole, Polysiloxanpolyole, Polyamine und Polyetherpolyamine sowie Polybutadienpolyole. Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können. Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäureenthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden. Die Herstellung geeigneter Polyacrylatpolyole ist dem Fachmann an sich bekannt. Sie werden durch radikalische Polymerisation von Hydroxylgruppen aufweisenden, olefinisch ungesättigten Monomeren oder durch radikalische Copolymiersation von Hydroxylgruppen aufweisenden, olefinisch ungesättigten Monomeren mit gegebenenfalls anderen olefinisch ungesättigten Monomeren, wie z.B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylnitril und/oder Methacrylnitril erhalten. Geeignete Hydroxylgruppen aufweisende, olefinisch ungesättigte Monomere sind insbesondere 2-Hydroxyethylacrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-butylperoxid.

Bevorzugt handelt es sich bei b) um höhermolekulare Polyhydroxyverbindungen.

Die Komponente (b) kann in einem geeigneten Lösemittel vorliegen. Geeignete Lösemittel sind solche, die eine ausreichende Löslichkeit der Komponente aufweisen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA). Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan), aber auch niedermolekulare Diamine, wie zum Beispiel Polyasparaginsäureester, sein.

Das Verfahren zur Herstellung der Polyisocyanat-Polyadditionsprodukte kann in Gegenwart üblicher Rheologieverbesserer, Stabilisatoren, UV-Schutzmittel, Katalyatoren, Hydrolyseschutzmittel, Emulgatoren, Füllstoffe, gegebenenfalls einbaufähiger Farbstoffe (die also über Zerewitinoff-aktive Wasserstoffatome verfügen) und/oder Farbpigmente durchgeführt werden. Möglich ist auch eine Zugabe von Zeolithen.

Bevorzugte Hilfs- und Zusatzmittel sind Treibmittel, Füllstoffe, Kreide, Ruß oder Zeolithe, Flammschutzmittel, Farbpasten, Wasser, Mikrobenschutzmittel, Fließverbesserer, Thixotropiermittel, Oberflächenmodifizierungsmittel und Verzögerer bei der Herstellung der Polyisocyanat-Polyadditionsprodukte. Weitere Hilfs- und Zusatzstoffe umfassen Entschäumer, Emulgatoren, Schaumstabilisatoren und Zellregler. Eine Übersicht ist in G. Oertel, Polyurethane Handbook, 2nd Edition, Carl Hanser Verlag, München, 1994, Kap. 3.4., enthalten.

Die erfindungsgemäß einzusetzenden Protonensäuren können beliebig aus einer Fülle an dem Fachmann als hierfür geeignet erscheinenden Stoffen ausgewählt werden. Wichtig ist lediglich, dass sie mit der Polyurethanmatrix keine negativen Wechselwirkungen eingehen bzw. zu Unverträglichkeiten führen, was durch geeignete Wahl der Molekülstruktur des Restes X- in der Protonensäure HX auf nahezu beliebige Weise realisiert werden kann. Auch kann die Protonsäure über den Rest X in der Polymermatrix des, in der Regel OH-Gruppen tragenden, Reaktionspartners b) für die Isocyanatkomponente a) gebunden vorliegen. So enthalten viele Polyacrylate des Standes der Technik acide Protonen aus dem Einbau von (Meth)acrylsäureeinheiten bei deren Herstellung. Mitunter ist die daraus resultierende Säurezahl sogar so hoch, dass die Thermolatenz des erfindungsgemäßen Katalysatorsystems leidet, was man durch einfache Vorversuche unter gezielter Variation der Säurezahl, Abpuffern mit geeigneten Basen etc. leicht auf das jeweils gewünschte Maß einstellen kann.

Schließlich kann die erfindungsgemäß einzusetzende Protonensäure auch erst bei der Aushärtungsreaktion aus geeigneten Precursoren wie Säureanhydriden, -halogeniden etc. z.B. durch die Einwirkung von (Luft)feuchtigkeit, generiert werden.

Die erfindungsgemäß hergestellten Systeme können in Lösung oder aus der Schmelze sowie bei Pulverlacken in fester Form mit Methoden wie Streichen, Rollen, Gießen, Spritzen, Tauchen, Wirbelschichtverfahren oder durch elektrostatische Sprühverfahren auf dem zu beschichtenden Gegenstand appliziert werden. Als Substrate eigenen sich beispielsweise Werkstoffe wie Metalle, Holz, Kunststoffe oder Keramiken.

### Beispiele

Die Erfindung soll anhand der nachfolgenden Beispiele näher erläutert werden. In den Beispielen sind alle Prozentangaben, soweit nicht anders vermerkt, als Gewichtsprozent zu verstehen. Alle Reaktionen wurden unter einer trockenen Stickstoffatmosphäre durchgeführt. Die Katalysatoren aus Tabelle 1 wurden nach Standard-Literaturvorschriften erhalten (vgl. Chem. Heterocycl. Comp. 2007 43 813-834 und darin zitierte Literatur), DBTL wurde von der Fa. Kever Technologie, Ratingen, D, bezogen.

Die Katalysatormenge wurde zur besseren Vergleichbarkeit der Aktivität der bei erfindungsgemäßer Herangehensweise durchgeführten Versuche mit den Vergleichsbeispielen als mg Sn je kg (Lösemittel-freiem) Polyisocyanathärter (ppm) angegeben, wobei als Polyisocyanathärter das Handelsprodukt Desmodur® N 3300 der Fa. Bayer MaterialScience AG, Leverkusen, DE, und als Modellverbindung für die Isocyanat-reaktive Komponente (,Poly'ol) genau ein Äquivalent (bezogen auf die freien Isocyanatgruppen des Polyisocyanathärters) Triethylenglykolmonomethylether, TEGMME (Produkt der Fa. Aldrich, Taufkirchen, D), eingesetzt wurden. Durch Zugabe von 10% (bezogen auf Desmodur® N 3300) n-Butylacetat wurde sichergestellt, über den gesamten Reaktionsverlauf hinreichend niedrigviskose Proben ziehen zu können, die eine genaue Erfassung des NCO-Gehaltes mittels Titration gemäß DIN 53 185 gestatten. Der zu Beginn der Reaktion ohne jedwede NCO-OH-Reaktion berechnete NCO-Gehalt beläuft sich dabei auf 10,9 +/-0,1 %, Versuche bei denen der NCO-Gehalt auf 0,1 % gefallen war oder bei denen nach 4 h Reaktionszeit noch mehr als 6% NCO-Gehalt vorlagen, wurden beendet.

Vergleichsversuch 1 bei konstant 30°C zeigt die äußerst langsame Abnahme des NCO-Gehaltes der Mischung im unkatalysierten Fall (Tabelle 2, Versuch 1). Um einen Vergleich der Beschleunigung der Reaktion bei 60°C bzw. 80°C ,Aushärtungstemperatur' gg. dem unkatalysierten Fall zu ermöglichen, wurden darüber hinaus Versuche bei anfangs konstant 30°C (2h) und anschließend 60 bzw. 80°C unkatalysiert durchgeführt (Tabelle 2, Versuch 2 und 3). Vergleichsversuch 4 stellt den mit Dibutylzinndilaurat gemäß Stand der Technik durchgeführten "Standardfall" dar. Vergleichsversuche 5 bis 8 belegen die abnehmende Thermolatenz der in WO 2011/051247 beschriebenen Systeme bei Erhöhung der Katalysatordosis am Beispiel des aktivsten der in den dortigen Beispielen beschriebenen Verbindungen (2,2-Dichlor-6-methyl-1,3,6,2-dioxazastannocan, in WO 2011/051247 "Katalysator 3" hier "Katalysator 1"). Vergleichsversuche 12 bis 15 belegen die deutlich geringere Aktivität bei Verwendung der gg. Katalysator 1 strukturell ähnlichen, jedoch Halogen-freien, spirocyclischen Sn(IV)-zentrierten Katalysatoren 2 (4,12-Dimethyl-1,7,9,15-tetraoxa-4,12-diaza-8-stannaspiro[7.7]pentadecan), 3 (4,12-Dibutyl-1,7,9,15-tetraoxa-4,12-diaza-8-stannaspiro[7.7]pentadecan) und 4 (4,12-Dibutyl-2,6,10,14-tetramethyl-1,7,9,15-tetraoxa-4,12-diaza-8-stannaspiro [7.7]pentadecan, Isomerengemisch).

Beispiel 22 (Vergleich) zeigt die deutlich geringere Stabilität einer hoch-katalysierten Isocyanathärterlösung bei Verwendung des Katalysators 1 gg. Katalysator 2.

**Tabelle 1 Übersicht der verwendeten Katalysatoren**

| **Katalysator** | **Strukturformel** | **Summenformel** | **Molgewicht [g/mol]** | **Sn-Gehalt** |
|---|---|---|---|---|
| **DBTL (Vergleich)** | 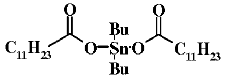 | C₃₂H₆₄O₄Sn | 631,55 | 18,79% |
| **Kat. 1** | 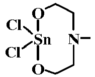 | C₅H₁₁Cl₂NO₂Sn | 306,74 | 38,69% |
| **Kat. 2** | 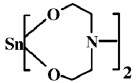 | C₁₀H₂₂N₂O₄Sn | 352,98 | 33,62% |
| **Kat. 3** | 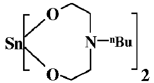 | C₁₆H₃₄N₂O₄Sn | 437,15 | 27,15% |
| **Kat. 4** | 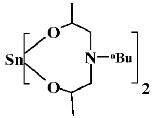 | C₂₀H₄₂N₂O₄Sn | 493,26 | 24,06% |

**Tabelle 2 Übersicht über die durchgeführten Versuche (Beispiele 1 - 8 sowie 12 bis 15: Vergleichsbeispiele, Beispiele 9 - 11 sowie 14 - 21: erfindungsgemäß)**

| **Bsp. -Nr.** | **Kat** | **Kat.-konz.** ¹⁾ | **NCO-Gehalt der Mischung [%] nach [hh:mm]** | | | | | | | | | |
|---|---|---|---|---|---|---|---|---|---|---|---|---|
| | | | **00:30** | **1:00** | **1:30** | **2:00** | **2:10** | **2:20** | **2:30** | **3:00** | **3:30** | **4:00** |
| 1 | ohne | 0²⁾ | 11,0 | 11,0 | 10,9 | 10,9 | 10,9 | 10,9 | 10,9 | 10,9 | 10,9 | 10,9 |
| 2 | ohne | 0³⁾ | 11,0 | 10,9 | 10,9 | 10,9 | 10,8 | 10,7 | 10,7 | 10,6 | 10,5 | 10,1 |
| 3 | ohne | 0⁴⁾ | 11,0 | 11,0 | 10,9 | 10,9 | 10,9 | 10,9 | 10,6 | 10,3 | 10,1 | 9,7 |
| 4 | DBTL | 20³⁾ | 10,3 | 9,7 | 9,2 | 8,6 | 8,3 | 7,8 | 7,6 | 2,9 | 1,4 | 0,1 |
| 5 | Kat. 1 | 20³⁾ | 11,0 | 11,0 | 11,0 | 10,9 | 10,8 | 10,7 | 10,3 | 8,8 | 7,3 | 6,2 |
| 6 | Kat. 1 | 40³⁾ | 10,9 | 10,7 | 10,5 | 9,9 | 9,6 | 9,0 | 8,0 | 5,5 | 4,2 | 2,6 |
| 7 | Kat. 1 | 60³⁾ | 10,6 | 10,5 | 10,1 | 9,7 | 9,6 | 9,1 | 5,3 | 2,5 | 1,3 | 0,8 |
| 8 | Kat. 1 | 200³⁾ | 10,1 | 9,2 | 8,3 | 7,6 | 6,9 | 4,5 | 3,5 | 1,0 | 0,2 | - |
| **9** | **Kat. 1** | **20^{3),5)}** | **7,5** | **7,0** | **6,2** | **5,7** | **5,2** | **3,7** | **2,8** | **1,5** | **0,9** | **0,2** |
| **10** | **Kat. 1** | **20^{3),6)}** | **10,5** | **10,4** | **10,0** | **9,9** | **9,2** | **8,2** | **6,7** | **3,8** | **2,2** | **1,3** |
| **11** | **Kat. 1** | **20^{3),7)}** | **10,8** | **10,5** | **10,4** | **10,2** | **9,7** | **8,8** | **7,8** | **5,9** | **3,4** | **2,8** |
| 12 | Kat. 2 | 20³⁾ | 11,0 | 11,0 | 10,9 | 10,9 | 10,7 | 10,5 | 10,3 | 10,0 | 9,7 | 9,5 |
| 13 | Kat. 2 | 60³⁾ | 10,9 | 10,8 | 10,7 | 10,6 | 10,3 | 9,8 | 9,7 | 8,9 | 8,2 | 6,0 |
| 14 | Kat. 3 | 50³⁾ | 11,0 | 11,0 | 11,0 | 11,0 | 10,7 | 10,5 | 10,2 | 9,7 | 9,2 | 8,1 |
| 15 | Kat. 4 | 50³⁾ | 10,9 | 10,7 | 10,7 | 10,6 | 10,5 | 10,2 | 10,1 | 8,6 | 7,5 | 6,8 |
| **16** | **Kat. 2** | **20^{3),5)}** | **10,5** | **10,5** | **10,3** | **10,1** | **10,1** | **8,7** | **6,1** | **1,3** | **0,5** | **-** |
| **17** | **Kat. 2** | **20^{3),8)}** | **11,0** | **11,0** | **11,0** | **11,0** | **10,9** | **10,7** | **10,5** | **9,8** | **9,0** | **8,3** |
| **18** | **Kat. 2** | **60^{3),8),9)}** | **10,5** | **10,5** | **10,4** | **10,4** | **10,2** | **9,8** | **9,5** | **8,5** | **6,6** | **4,2** |
| **19** | **Kat. 2** | **60^{3),10)}** | **10,5** | **10,3** | **10,1** | **10,0** | **9,7** | **8,1** | **4,8** | **0,2** | **-** | **-** |
| **20** | **Kat. 3** | **50^{3),5)}** | **10,8** | **10,0** | **9,8** | **9,7** | **9,2** | **3,3** | **0,9** | **-** | **-** | **-** |
| **21** | **Kat. 4** | **50^{3),10)}** | **11,0** | **10,6** | **10,4** | **10,1** | **9,8** | **7,0** | **6,2** | **0,6** | **-** | - |

| | | | | | | | | | | | | |
|---|---|---|---|---|---|---|---|---|---|---|---|---|
| ¹⁾ Sn [ppm] auf Polyisocyanathärter ²⁾ konstant 30°C; nach 97 h bei 30°C: 8,9% NCO ³⁾ erste 2 h 30°C, dann 60°C ⁴⁾ erste 2 h 30°C, dann 80°C ⁵⁾ 1% Essigsäure auf TEGMME ⁶⁾ 0,1% Essigsäure auf TEGMME ⁷⁾ 0,15% Terephthalsäure auf TEGMME ⁸⁾ 0,25% Essigsäure auf TEGMME ⁹⁾ nach 4:30: 0,5% ¹⁰⁾ 0,5% Essigsäure auf TEGMME | | | | | | | | | | | | |

### Beispiel 22

Durch jeweils 3-tägiges Rühren bei 50°C mit überschüssigem Katalysator 1 bzw. 2 (Feststoff) gesättigte und anschließend filtrierte Lösungen von
a) Katalysator 1 (nach Filtration 22,5 % NCO-Gehalt, Viskosität 1500 mPas bei 23°C) bzw.
b) Katalysator 2 (nach Filtration 22,7 % NCO-Gehalt, Viskosität 1250 mPas bei 23°C) in Desmodur® N 3600, Handelsprodukt der Fa. Bayer MaterialScience AG, Leverkusen, D, wurden bei 50°C im Trockenschrank aufbewahrt. Nach 6 monatiger Lagerung war die Mischung aus Beispiel 22a) vollständig geliert. Die Mischung aus Beispiel 22b) hingegen war nur leicht verändert und wies folgende Daten auf: 21,9 % NCO-Gehalt, 1860 mPas bei 23°C.

## Patentansprüche

1. Verfahren zur Herstellung von Polyisocyanat-Polyadditionsprodukten wobei
a) mindestens ein aliphatisches, cycloaliphatisches, araliphatisches und/oder aromatisches Polyisocyanat
b) mindestens eine NCO-reaktive Verbindung
c) mindestens ein anorganischer, Zinn enthaltender Katalysator
d) gegebenenfalls weitere von c) verschiedene Katalysatoren und/oder Aktivatoren
e) gegebenenfalls Füllstoffe, Pigmente, Additive, Verdicker, Entschäumer und/oder andere Hilfs- und Zusatzstoffe und
f) eine, bezogen auf den unter c) genannten Katalysator mindestens äquimolare Menge und bezogen auf die NCO-reaktiven Gruppen aus der Verbindung aus b) maximal äquimolare Menge einer Protonensäure
miteinander zur Reaktion gebracht werden, wobei das Verhältnis des Gewichts des Zinns aus Komponente c) und des Gewichts der Komponente a) weniger als 1000 ppm beträgt, wenn Komponente a) ein aliphatisches Polyisocyanat ist und weniger als 80 ppm beträgt, wenn Komponente a) ein aromatisches Polyisocyanat ist,
**dadurch gekennzeichnet, dass** als Katalysatoren c) zyklische Zinnverbindungen der Formel I, II oder III eingesetzt werden: 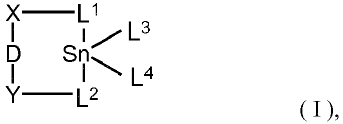 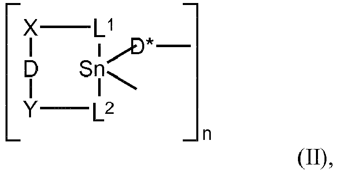 mit n > 1, 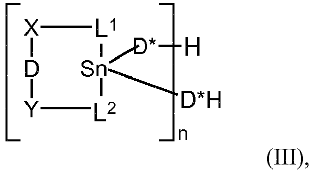 mit n > 1, wobei gilt, dass
D für -O-, -S- oder -N(R¹)- steht,
wobei R¹ für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff oder den Rest 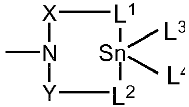 steht,
oder R1 und L3 zusammen für -Z-L⁵- stehen, und
D* für -O- oder -S- steht, sowie
X, Y und Z für gleiche oder unterschiedliche Reste ausgewählt aus Alkylenresten der Formeln -C(R²)(R³)-, -C(R²)(R³)-C(R⁴)(R⁵)- oder -C(R²)(R³)-C(R⁴)(R⁵)-C(R⁶)(R⁷)- oder ortho-Arylenresten der Formeln 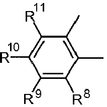 oder 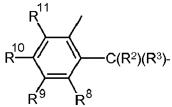 stehen,
wobei R² bis R¹¹ unabhängig voneinander für gesättigte oder ungesättigte, linare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen, und
L¹, L² und L⁵ unabhängig voneinander für -O-, -S-, -OC(=O)-, -OC(=S)-, -SC(=O)-,-SC(=S)-, -OS(=O)₂O-, -OS(=O)₂- oder -N(R12)- stehen,
wobei R¹² für einen gesättigten oder ungesättigten, linearen oder verzweigten, aliphatischen oder cycloaliphatischen oder einen gegebenenfalls substituierten, aromatischen oder araliphatischen Rest mit bis zu 20 Kohlenstoffatomen steht, der gegebenenfalls Heteroatome aus der Reihe Sauerstoff, Schwefel, Stickstoff enthalten kann, oder für Wasserstoff steht, und;
L³ und L⁴ unabhängig voneinander für -OH, -SH, -OR¹³, -Hal, -OC(=O)R¹⁴, -SR¹⁵,-OC(=S)R¹⁶, -OS(=O)₂OR¹⁷, -OS(=O)₂R¹⁸ oder -NR¹⁹R²⁰ stehen, oder L³ und L⁴ zusammen für -L¹-X-D-Y-L²- stehen,
wobei für R¹³ bis R²⁰ unabhängig voneinander für gesättigte oder ungesättigte, lineare oder verzweigte, aliphatische oder cycloaliphatische oder gegebenenfalls substituierte, aromatische oder araliphatische Reste mit bis zu 20 Kohlenstoffatomen stehen, die gegebenenfalls Heteroatome aus der Reihe Sauerstoff, Schwefel, Stickstoff enthalten können, oder für Wasserstoff stehen.

2. Verfahren gemäß Anspruch 1, wobei L³ und L⁴ zusammen für -L¹-X-D-Y-L² stehen.

3. Verfahren gemäß Ansprüchen 1 und 2, wobei D -N(R¹)- ist und R¹ Wasserstoff oder ein Alkyl-, Aralkyl-, Alkaryl- oder Arylrest mit bis zu 20 C-Atomen ist oder der Rest 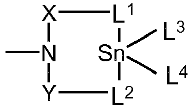 ist.

4. Verfahren Anspruch 2, wobei R¹ Wasserstoff oder ein Methyl-, Ethyl-, Propyl-, Butyl-, Hexyl-, Octyl-, Ph-, oder CH₃Ph-Rest oder der Rest 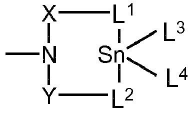 ist und wobei Propyl-, Butyl-, Hexyl-, und Octyl für alle isomeren Propyl-, Butyl-, Hexyl- sowie Octylreste stehen.

5. Verfahren gemäß einem der Ansprüche 1 bis 3, wobei D* -O- ist.

6. Verfahren gemäß einem der Ansprüche 1 bis 4, wobei X, Y und Z unabhängig voneinander Alkylenreste der Formel -C(R²)(R³)-
oder -C(R²)(R³)-C(R⁴)(R⁵)- oder ortho-Arylenreste der Formel 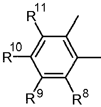 sind und R² bis R⁵ unabhängig voneinander Wasserstoff, Alkyl-, Aralkyl-, Alkaryl- oder Arylreste mit bis zu 20 C-Atomen sind und R⁸ bis R¹¹ unabhängig voneinander Wasserstoff oder Alkylreste mit bis zu 8 C-Atomen sind.

7. Verfahren gemäß Anspruch 5, wobei die Reste R² bis R⁵ unabhängig voneinander Wasserstoff oder Alkylreste mit bis zu 8 C-Atomen sind und R⁸ bis R¹¹ unabhängig voneinander Wasserstoff oder Methyl sind.

8. Verfahren gemäß einem der Ansprüche 1 bis 6, wobei L¹, L² und L⁵ unabhängig voneinander -N(R¹²)-, -S-, -SC(=S)-, -SC(=O)-, -OC(=S)-, -O- oder -OC(=O)- sind und R¹² Wasserstoff oder ein Alkyl-, Aralkyl-, Alkaryl- oder Arylrest mit bis zu 20 C-Atomen ist.

9. Verfahren gemäß Anspruch 7, wobei L¹, L² und L⁵ unabhängig voneinander -N(H)-, -N(CH₃)-, -N(C₂H₅)-, -N(C₄H₉)-, -N(C₈H₁₇)-, -N(C₆H₅)-, -S-, -SC(=S)-, -SC(=O)-, -OC(=S)-, -O- oder -OC(=O)- sind.

10. Verfahren einem der Ansprüche 1 bis 8, wobei L³ und L⁴ unabhängig voneinander -OH,-SH, -OR¹³, -Hal oder -OC(=O)R¹⁴ sind und die Reste R¹³ und R¹⁴ bis zu 20 Kohlenstoffatome aufweisen.

11. Verfahren gemäß Anspruch 9, wobei L³ und L⁴ unabhängig voneinander Cl-, MeO-, EtO-, PrO-, BuO-, HexO-, OctO-, PhO-, Formiat, Acetat, Propanoat, Butanoat, Pentanoat, Hexanoat, Octanoat, Laurat, Lactat oder Benzoat sind, wobei Pr, Bu, Hex und Oct für alle isomeren Propyl-, Butyl-, Hexyl- sowie Octylreste stehen.

## Claims

1. Process for producing polyisocyanate polyaddition products wherein
a) at least one aliphatic, cycloaliphatic, araliphatic and/or aromatic polyisocyanate
b) at least one NCO-reactive compound
c) at least one inorganic catalyst comprising tin
d) optionally further catalysts different from c) and/or activators
e) optionally fillers, pigments, additives, thickeners, defoamers and/or other auxiliaries and additives and
f) an at least equimolar amount, based on the catalyst specified under c), and at most an equimolar amount, based on the NCO-reactive groups of the compound of b), of a protic acid
are reacted with one another, wherein the ratio of the weight of tin of component c) and the weight of component a) is less than 1000 ppm if component a) is an aliphatic polyisocyanate, and is less than 80 ppm if component a) is an aromatic polyisocyanate,
**characterized in that** the catalysts c) used are cyclic tin compounds of the formula I, II or III: 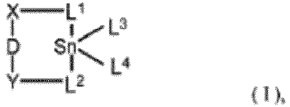 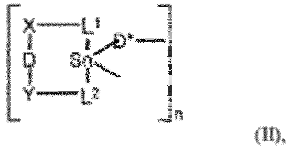 where n>1, 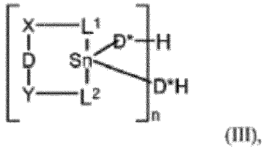 where n>1, where
D is -O-, -S- or -N(R¹)-,
where R¹ is a saturated or unsaturated, linear or branched, aliphatic or cycloaliphatic or an optionally substituted aromatic or araliphatic radical having up to 20 carbon atoms, which may optionally comprise heteroatoms from the series oxygen, sulfur, nitrogen, or is hydrogen or the radical 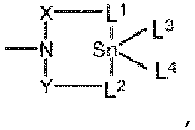 or R1 and L3 together are -Z-L⁵, and
D* is -O- or -S-, and
X, Y and Z are the same or different radicals selected from alkylene radicals of the formulae -C(R²)(R³)-, -C(R²)(R³)-C(R⁴)(R⁵)- or -C(R²)(R³)-C(R⁴)(R⁵)-C(R⁶)(R⁷)- or ortho-arylene radicals of the formulae 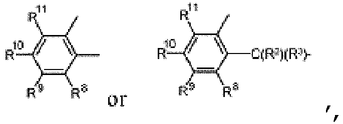 where R² to R¹¹ are each independently saturated or unsaturated, linear or branched, aliphatic or cycloaliphatic or optionally substituted aromatic or araliphatic radicals having up to 20 carbon atoms, which may optionally comprise heteroatoms from the series oxygen, sulfur, nitrogen, or are hydrogen, and
L¹, L² and L⁵ are each independently -O-, -S-, -OC(=O)-, -OC(=S)-, -SC(=O)-, -SC(=S)-, -OS(=O)₂O-, -OS(=O)₂- or -N(R12)-,
where R¹² is a saturated or unsaturated, linear or branched, aliphatic or cycloaliphatic or an optionally substituted aromatic or araliphatic radical having up to 20 carbon atoms, which may optionally comprise heteroatoms from the series oxygen, sulfur, nitrogen, or is hydrogen, and;
L³ and L⁴ are each independently -OH, -SH, -OR¹³, - Hal, -OC(=O)R¹⁴, -SR¹⁵, -OC(=S)R¹⁶, -OS(=O)₂OR¹⁷,-OS(=O)₂R¹⁸ or -NR¹⁹R²⁰, or L³ and L⁴ together are -L¹-X-D-Y-L²-,
where R¹³ to R²⁰ are each independently saturated or unsaturated, linear or branched, aliphatic or cycloaliphatic or optionally substituted aromatic or araliphatic radicals having up to 20 carbon atoms, which may optionally comprise heteroatoms from the series oxygen, sulfur, nitrogen, or are hydrogen.

2. Process according to Claim 1, wherein L³ and L⁴ together are -L¹-X-D-Y-L².

3. Process according to Claims 1 and 2, wherein D is -N(R¹)- and R¹ is hydrogen or an alkyl, aralkyl, alkaryl or aryl radical having up to 20 carbon atoms or is the radical

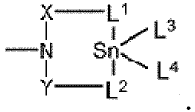

4. Process according to Claim 2, wherein R¹ is hydrogen or a methyl, ethyl, propyl, butyl, hexyl, octyl, Ph, or CH₃Ph radical or is the radical 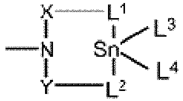 and wherein propyl, butyl, hexyl and octyl are all isomeric propyl, butyl, hexyl and octyl radicals.

5. Process according to any of Claims 1 to 3, wherein D* is -O-.

6. Process according to any of Claims 1 to 4, wherein X, Y and Z are each independently alkylene radicals of the formula -C(R²)(R³)- or -C(R²)(R³)-C(R⁴)(R⁵)- or ortho-arylene radicals of the formula 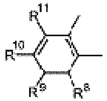 and R² to R⁵ are each independently hydrogen, alkyl, aralkyl, alkaryl or aryl radicals having up to 20 carbon atoms and R⁸ to R¹¹ are each independently hydrogen or alkyl radicals having up to 8 carbon atoms.

7. Process according to Claim 5, wherein the radicals R² to R⁵ are each independently hydrogen or alkyl radicals having up to 8 carbon atoms and R⁸ to R¹¹ are each independently hydrogen or methyl.

8. Process according to any of Claims 1 to 6, wherein L¹, L² and L⁵ are each independently -N(R¹²)-, -S-, -SC(=S)-, -SC(=O)-, -OC(=S)-, -O-, or -OC(=O)- and R¹² is hydrogen or an alkyl, aralkyl, alkaryl or aryl radical having up to 20 carbon atoms.

9. Process according to Claim 7, wherein L¹, L² and L⁵ are each independently -N(H)-, -N(CH₃)-, -N(C₂H₅)-, -N(C₄H₉)-, -N(C₈H₁₇)-, -N(C₆H₅)-, -S-, -SC(=S)-, -SC(=O)-, -OC(=S)-, -O- or -OC(=O)-.

10. Process according to any of Claims 1 to 8, wherein L³ and L⁴ are each independently -OH, -SH, -OR¹³, -Hal or -OC(=O)R¹⁴ and the radicals R¹³ and R¹⁴ have up to 20 carbon atoms.

11. Process according to Claim 9, wherein L³ and L⁴ are each independently Cl-, MeO-, EtO-, PrO-, BuO-, HexO-, OctO-, PhO-, formate, acetate, propanoate, butanoate, pentanoate, hexanoate, octanoate, laurate, lactate or benzoate, wherein Pr, Bu, Hex and Oct are all isomeric propyl, butyl, hexyl and octyl radicals.

## Revendications

1. Procédé pour la préparation de produits de polyaddition de polyisocyanate
a) au moins un polyisocyanate aliphatique, cycloaliphatique, araliphatique et/ou aromatique
b) au moins un composé réactif envers NCO
c) au moins un catalyseur inorganique contenant de l'étain
d) éventuellement d'autres catalyseurs différents de c) et/ou des activateurs
e) éventuellement des charges, des pigments, des additifs, des épaississants, des antimousses et/ou d'autres adjuvants et additifs et
f) une quantité, au moins équimolaire par rapport au catalyseur mentionné dans c) et au plus équimolaire par rapport aux groupes réactifs envers NCO du composé de b), d'un acide protonique
étant mis en réaction ensemble, le rapport du poids de l'étain du composant c) et du poids du composant a) étant inférieur à 1000 ppm, lorsque le composant a) est un polyisocyanate aliphatique et inférieur à 80 ppm, lorsque le composant a) est un polyisocyanate aromatique,
**caractérisé en ce que** des composés cycliques de l'étain de formule I, II ou III sont utilisés en tant que catalyseurs c) : 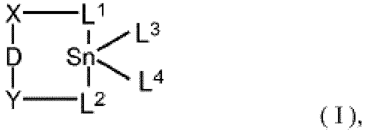 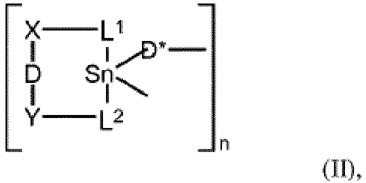 avec n > 1, 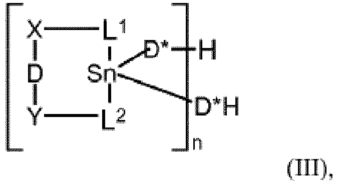 avec n > 1, ceci s'appliquant :
D représente -O-, -S-, ou -N(R¹)-,
R¹ représentant un radical, aliphatique ou cycloaliphatique, saturé ou insaturé, linéaire ou ramifié, ou un radical aromatique ou araliphatique éventuellement substitué, comportant jusqu'à 20 atomes de carbone, qui peut éventuellement contenir des hétéroatomes de la série oxygène, soufre, azote, ou représentant hydrogène ou le radical 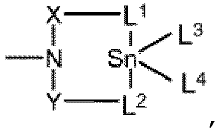 ou R¹ et L³ représentant ensemble -Z-L⁵-, et
D* représente -O- ou -S-, ainsi que
X, Y et Z représentent des radicaux identiques ou différents choisis parmi des radicaux alkylène des formules -C(R²)(R³)-, -C(R²)(R³)-C(R⁴)(R⁵)- ou-C(R²)(R³)-C(R⁴)(R⁵)-C(R⁶)(R⁷)- ou des radicaux ortho-arylène des formules 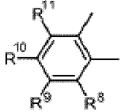 ou 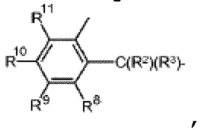 R² à R¹¹ représentant indépendamment les uns des autres des radicaux aliphatiques ou cycloaliphatiques, saturés ou insaturés, linéaires ou ramifiés, ou des radicaux aromatiques ou araliphatiques éventuellement substitués, comportant jusqu'à 20 atomes de carbone, qui peuvent éventuellement contenir des hétéroatomes de la série oxygène, soufre, azote, ou représentant hydrogène, et
L¹, L² et L⁵ représentent indépendamment les uns des autres -O-, -S-, -OC(=O)-, -OC(=S)-, -SC(=O)-, -SC(=S)-, -OS(=O)₂O-, -OS(=O)₂- ou -N(R¹²)-,
R¹² représentant un radical aliphatique ou cycloaliphatique, saturé ou insaturé, linéaire ou ramifié, ou un radical aromatique ou araliphatique éventuellement substitué, comportant jusqu'à 20 atomes de carbone, qui peut éventuellement contenir des hétéroatomes de la série oxygène, soufre, azote, ou représentant hydrogène, et ;
L³ et L⁴ représentent indépendamment l'un de l'autre -OH, -SH, -OR¹³, -halogéno, -OC(=O)R¹⁴,-SR¹⁵, -OC(=S)R¹⁶, -OS(=O)₂OR¹⁷, -OS(=O)₂R¹⁸ ou-NR¹⁹R²⁰, ou L³ et L⁴ représentent ensemble -L¹-X-D-Y-L²-,
R¹³ à R²⁰ représentant indépendamment les uns des autres des radicaux aliphatiques ou cycloaliphatiques, saturés ou insaturés, linéaires ou ramifiés, ou des radicaux aromatiques ou araliphatiques éventuellement substitués, comportant jusqu'à 20 atomes de carbone, qui peuvent éventuellement contenir des hétéroatomes de la série oxygène, soufre, azote, ou représentant hydrogène.

2. Procédé selon la revendication 1, L³ et L⁴ représentant ensemble -L¹-X-D-Y-L².

3. Procédé selon les revendications 1 et 2, D étant-N(R¹)- et R¹ étant hydrogène ou un radical alkyle, aralkyle, alkaryle ou aryle comportant jusqu'à 20 atomes de C ou étant le radical

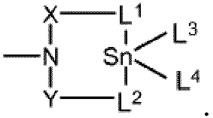

4. Procédé selon la revendication 2, R¹ étant hydrogène ou un radical méthyle, éthyle, propyle, butyle, hexyle, octyle, Ph, ou CH₃Ph ou le radical 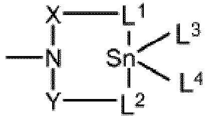 et propyle, butyle, hexyle, et octyle représentant tous les radicaux isomériques de propyle, de butyle, d'hexyle ainsi que d'octyle.

5. Procédé selon l'une quelconque des revendications 1 à 3, D* étant -O-.

6. Procédé selon l'une quelconque des revendications 1 à 4, X, Y et Z étant indépendamment les uns des autres des radicaux alkylène de formule -C(R²)(R³)- ou -C(R²)(R³)-C(R⁴)(R⁵)- ou des radicaux ortho-arylène de formule 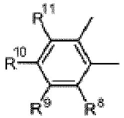 et R² à R⁵ étant indépendamment les uns des autres hydrogène, des radicaux alkyle, aralkyle, alkaryle ou aryle comportant jusqu'à 20 atomes de C et R⁸ à R¹¹ étant indépendamment les uns des autres hydrogène ou des radicaux alkyle comportant jusqu'à 8 atomes de C.

7. Procédé selon la revendication 5, les radicaux R² à R⁵ étant indépendamment les uns des autres hydrogène ou des radicaux alkyle comportant jusqu'à 8 atomes de C et R⁸ à R¹¹ étant indépendamment les uns des autres hydrogène ou méthyle.

8. Procédé selon l'une quelconque des revendications 1 à 6, L¹, L² et L⁵ étant indépendamment les uns des autres -N(R¹²) -, -S-, -SC(=S)-, -SC(=O)-,-OC(=S)-, -O- ou -OC(=O)- et R¹² étant hydrogène ou un radical alkyle, aralkyle, alkaryle ou aryle comportant jusqu'à 20 atomes de C.

9. Procédé selon la revendication 7, L¹, L² et L⁵ étant indépendamment les uns des autres -N(H)-,-N(CH₃)-, -N(C₂H₅)-, -N(C₄H₉)-, -N(C₈H₁₇)-, -N(C₆H₅)-, -S-, -SC(=S)-, -SC(=O)-, -OC(=S)-, -O- ou -OC(=O)-.

10. Procédé selon l'une quelconque des revendications 1 à 8, L³ et L⁴ étant indépendamment l'un de l'autre -OH, -SH, -OR¹³, -halogéno ou -OC(=O)R¹⁴ et les radicaux R¹³ et R¹⁴ présentant jusqu'à 20 atomes de carbone.

11. Procédé selon la revendication 9, L³ et L⁴ étant indépendamment l'un de l'autre Cl-, MeO-, EtO-, PrO-, BuO-, HexO-, OctO-, PhO-, formiate, acétate, propanoate, butanoate, pentanoate, hexanoate, octanoate, laurate, lactate ou benzoate, Pr, Bu, Hex et Oct représentant tous les radicaux isomériques de propyle, de butyle, d'hexyle ainsi que d'octyle.
